# EUROPEAN PATENT APPLICATION

(11) **EP 1 990 203 A2**
(43) Date of publication of application: **12.11.2008**
(21) Application number: 07118228.1
(22) Date of filing: 10.10.2007
(51) Int. Cl.: B41J 2/325, B41J 3/44, B41J 3/46, H04N 1/00

(54) **Digital photo album with photo printer**

(30) Priority: 08.05.2007 CN 200710102428
(71) Applicant: Universal Scientific Industrial Co., Ltd., Nan-Tou (TW)
(72) Inventor: Chang, Ruei-Tsang, Nan-Tou (TW); Yang, Shang-Hsun, Nan-Tou (TW)
(74) Representative: Viering, Jentschura & Partner

(57) **Abstract**

A digital photo album with a photo printer comprises a printing apparatus (1) and a digital photo album (2). The printing apparatus includes a printer housing (11), a driving mechanism (12), a paper tray (13), and a printing unit (14). The driving mechanism, the paper tray, and the printing unit are installed in the printer housing. The digital photo album includes a frame (21) and a display (22). The display is installed on the frame and combined with the printer housing of the printing apparatus. Thereby, the digital photo album with a photo printer can both display and print photos so that they can be viewed and printed according to the wishes of the user.

## Description

### BACKGROUND OF THE INVENTION

### 1. Field of the invention

The present invention relates to a digital photo album with a photo printer and more particularly to a digital photo album with a photo printer that can operate independently without depending on other electronic products and combines a digital photo album and a photo printer to browse and print according to the wishes of a user.

### 2. Description of the Prior Art

A digital photo album is a kind of electronic product that has developed along with the current progress of computer and Internet technology. A conventional digital photo album uses a display, such as an LCD, to display digital photos instead of the traditional photo frame.

However, the conventional digital photo album cannot print the photos. Hence, users have to connect an external printer with the digital photo album to print photos or have their photos developed at photo shops. Despite photo printers now being available for personal and household use, conventional photo printers cannot be used to display photos like a digital photo album.

The inventor of the present invention recognizes the above shortage should be corrected and special effort has been paid to research this field. The present invention is presented with reasonable design and good effect to resolve the above problems.

### SUMMARY OF THE INVENTION

It is a primary object of the present invention to provide a digital photo album that is used to either browse or select digital photos on a digital display and print the selected photos, or hang the photos on a wall or place it on a desk as a framed photo or ornament.

For achieving the objective stated above, the digital photo album with a photo printer comprising a printing apparatus has a printer housing and a printing unit. The printing unit is disposed in the printer housing. It further comprises a digital photo album that has a frame and a display, the display being installed on the frame and combined with the printer housing of the printing apparatus.

The present invention has the following advantages: 1. The digital photo album with a photo printer can operate independently without relying on other electronic products and can be chosen to browse and print according to the wishes of the user. In addition, the digital photo album with a photo printer can be hung on a wall or placed on a desk as a photo frame or an ornament.

2. The printing apparatus is integrated with a paper tray to reduce its occupied space, and the digital photo album with a photo printer can be placed in any direction to print.

It is to be understood that both the foregoing general description and the following detailed description are exemplary, and are intended to provide further explanation of the invention as claimed. Other advantages and features of the invention will be apparent from the following description, drawings and claims.

### BRIEF DESCRIPTION OF THE DRAWINGS

The above and further advantages of this invention may be better understood by referring to the following description, taken in conjunction with the accompanying drawings, in which:
Fig. 1 is an exploded perspective view of a digital photo album with a photo printer according to the present invention;
Fig. 2 is a perspective view of the digital photo album with a photo printer according to the present invention;
Fig. 3 is a bottom view of the digital photo album with a photo printer according to the present invention;
Fig. 4 is a side view of the digital photo album with a photo printer according to the present invention; and
Fig. 5 is a cross-sectional view of the digital photo album with a photo printer according to the present invention.

The drawings will be described further in connection with the following Detailed Description of the Invention.

### DETAILED DESCRIPTION OF THE PREFERRED EMBODIMENTS

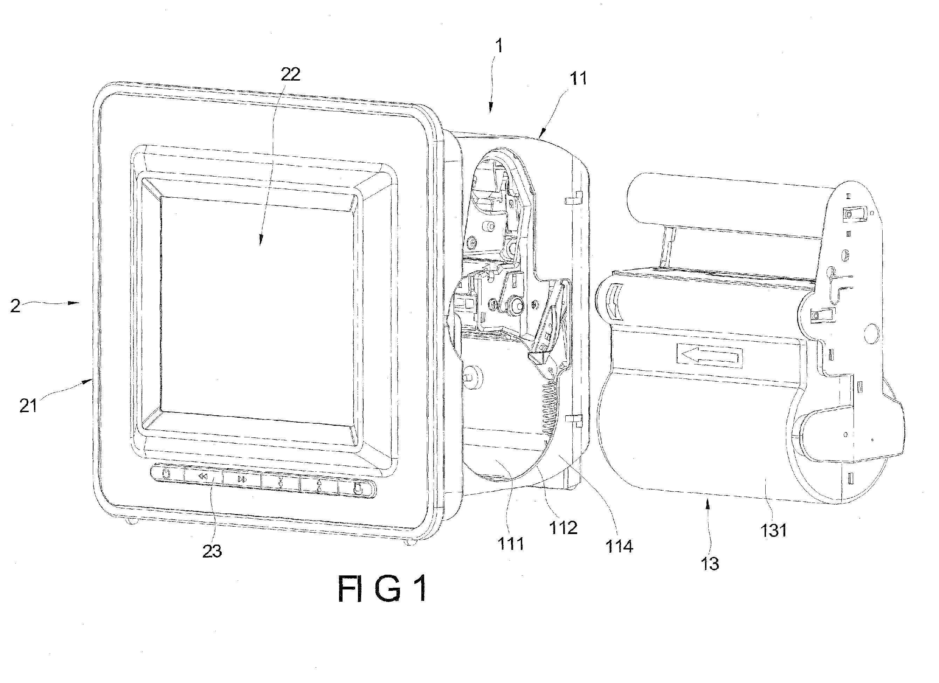

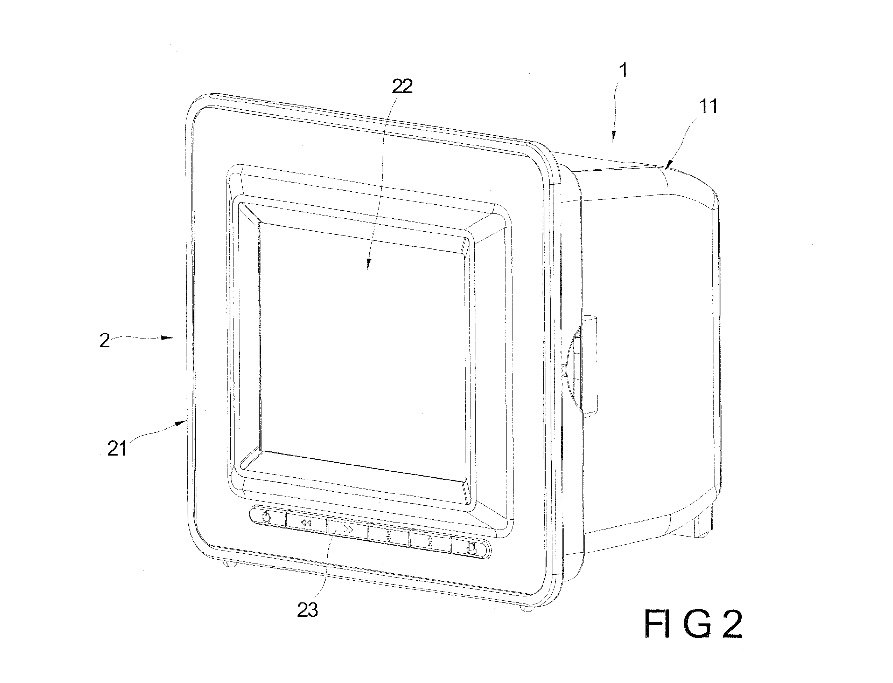

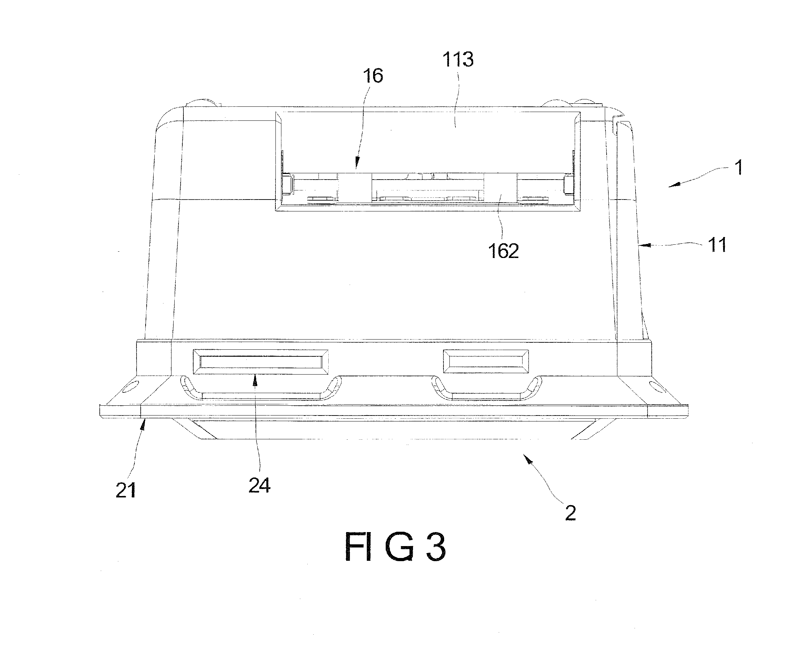

Please refer to Figs. 1 to 5. The present invention provides a digital photo album with a photo printer that comprises a printing apparatus 1 and a digital photo album 2. The printing apparatus 1 includes a printer housing 11, a driving mechanism 12, a paper tray 13, a printing unit 14, a paper cutter 15, and a conveyer mechanism 16. The printer housing 11 is a hollow casing and a containing space 111 is formed therein. The containing space 111 has a base frame 114 therein for containing and fixing the driving mechanism 12, the paper tray 13, the printing unit 14, the paper cutter 15, and the conveyer mechanism 16.

The driving mechanism 12 is installed in one side of the base frame 114 within the containing space 111. The driving mechanism 12 includes a motor (not shown), a gear set (not shown), a photographic paper driving shaft 123, and a ribbon driving shaft 124.

The motor is a power source and the gear set is installed between the motor, the photographic paper driving shaft 123, and the ribbon driving shaft 124. When the motor is driven to rotate, the power of the motor can be transmitted separately to the photographic paper driving shaft 123 and the ribbon driving shaft 124 via the gear set so as to drive the photographic paper driving shaft 123 and the ribbon driving shaft 124 to rotate.

The paper tray 13 is disposed on the base frame 114 within the containing space 111 of the printer housing 11. One side of the printer housing 11 and the base frame 114 has a picking-placing opening 112 corresponding to the paper tray 13 for conveniently taking out and putting in the paper tray 13. The paper tray 13 includes a casing 131, a feed roller 132, a ribbon supplying shaft 133, and a ribbon collecting shaft 134. The feed roller 132 is a hollow cylinder-shaped housing, and the feed roller 132 allows the rolled photo paper to be placed therein so that the photo paper can be conveyed out. The feed roller 132 can be rotatably and pivotally disposed in the casing 131. One end of the feed roller 132 is connected with the photographic paper driving shaft 123 of the driving mechanism 12, so that the feed roller 132 is driven to rotate by the photographic paper driving shaft 123 to convey the photo paper out.

The ribbon supplying shaft 133 and the ribbon collecting shaft 134 are rotatably and pivotally disposed in the casing 131. A rolled ribbon can be installed onto the ribbon supplying shaft 133, and one end of the ribbon is rolled up the ribbon collecting shaft 134. One end of the ribbon collecting shaft 134 is connected with the ribbon driving shaft 124 of the driving mechanism 12, so that the ribbon collecting shaft 134 is driven to rotate by the ribbon driving shaft 124 to pull the ribbon forward on the ribbon supplying shaft 133 and roll the ribbon on the ribbon collecting shaft 134.

The printing unit 14 is disposed on the base frame 114 within the containing space 111 of the printer housing 11. The printing unit 14 has a thermal printer head 141 installed between the ribbon supplying shaft 133 and the ribbon collecting shaft 134. The thermal printer head 141 transfers heat for the ribbon by instantaneously heating, so that the thermal printer head 141 can transfer the three primary colors on the photo paper and print a layer of protective film. The thermal printer head 141 has a heat sink 142 and a fan 143 to dissipate heat for the thermal printer head 141.

The paper cutter 15 is installed on the base frame 114 within the containing space 11. The paper cutter 15 is adjacently connected with the thermal printer head 141 of the printing unit 14 for cutting the photo paper.

The conveyer mechanism 16 is installed on the base frame 114 of the containing space 111 of the printer housing 11, and also disposed on a side of the printing unit 14 corresponding to the papery tray 13. The conveyer mechanism 16 has a plurality of pick up wheels 162 connected with the driving mechanism 12 so that the pick up wheels 162 are driven to rotate via the driving mechanism 12 to convey the printed photos. The printer housing 11 has a paper exit 113 corresponding to the conveyer mechanism 16 to convey the printed photos out of the paper exit 113.

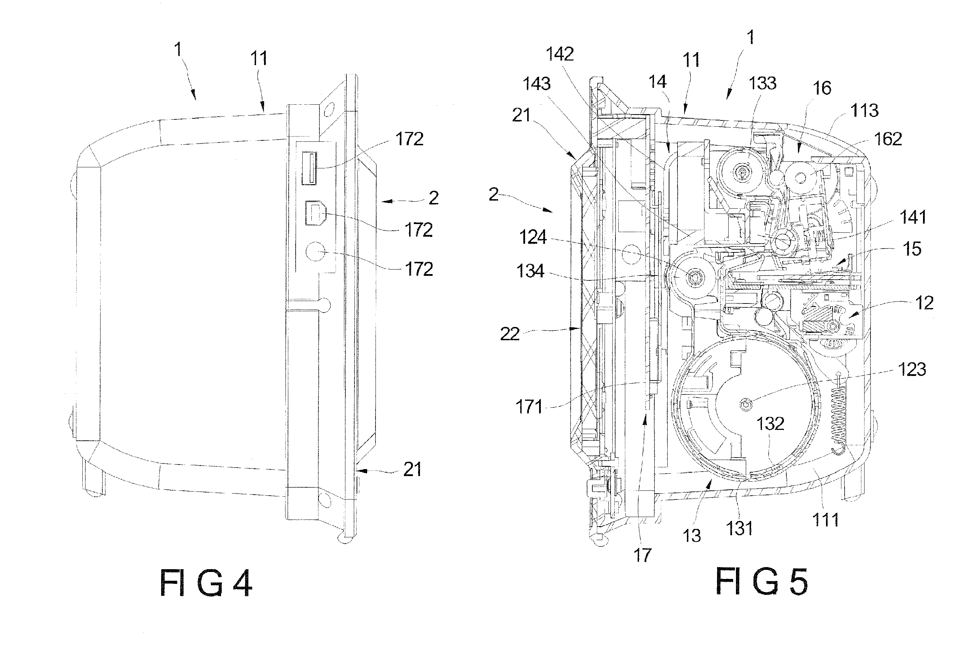

The printer housing 11 further includes a circuit unit 17. The printing unit 17 includes a circuit board 171 and at least one connection port 172 (as shown in Fig. 4) electrically connected with the circuit board 171. In this embodiment, each of the connection ports 172 can be a power outlet or a connection hole for other electronic devices, such as televisions or digital cameras. The driving mechanism 12 and the printing unit 14 are electrically connected with the circuit unit 17.

The digital photo album 2 includes a frame 21 and a display 22. The display 22 is installed on the frame 21, and the frame 21 is connected with the printer housing 11 of the printing apparatus 1 by a combining or integrally forming method to join the digital photo album 2 so that the digital album 2 integrates with the printing apparatus 1. The frame 21 has a plurality of buttons 23 on a front side that can be mode selecting buttons, inputting buttons, or direction moving buttons.

The display 22 is a liquid crystal display (LCD) for a digital visual interface. The display 22 is electrically connected with the circuit unit 17, and other electronic products transmit data to the display 22 via the connection ports 172 to display the digital photos. In addition, the display 22 can also be a touch screen.

The digital photo album 2 has at least one memory card connector 24 electrically connected with the circuit unit 17. A memory card could be inserted in the card connector 24 and transmits data to the display 22. The memory card connector 24 can be a USB (Universal Serial Bus) connector for inserting a pen drive. The display 22 can repeatedly display the photos stored in the memory card when no photos are being printed. Thereby, the digital photo album with a photo printer of the present invention is formed.

The digital photo album with a photo printer of the present invention can be operated independently by means of combining the digital photo album 2 and the printing apparatus 1. The digital photo album with a photo printer can operate independently without depending on other electronic products and allow a user to browse and print according to the wishes of the user. In addition, the digital photo album with a photo printer can be hung on a wall or placed on a desk as a photo frame or an ornament.

The digital photo album with a photo printer can be used to conveniently and quickly print selected photos. In addition, the digital photo album with a photo printer can quickly print photos thereby saving the user the expense, time and inconvenience of having their photos printed for them at a photo developing shop.

The printing apparatus 1 is integrated with a paper tray 13 to reduce its occupied space. The digital photo album with a photo printer can be placed in any direction to print instead of occupying a large space and limiting the specific direction due to separation of the printing apparatus 11 and the paper tray 13.

Although the present invention has been described with reference to the preferred embodiment thereof, it will be understood that the invention is not limited to the details thereof. Various substitutions and modifications have been suggested in the foregoing description, and others will occur to those of ordinary skill in the art. Therefore, all such substitutions and modifications are intended to be embraced within the scope of the invention as defined in the appended claims.

## Claims

1. A digital photo album with a digital photo album with a photo printer, comprising:
a printing apparatus having a printer housing and a printing unit, the printing unit being disposed in the printer housing; and
a digital photo album having a frame and a display, the display being installed on the frame and combined with the printer housing of the printing apparatus.

2. The digital photo album with a photo printer as claimed in claim 1, wherein the printer housing has a paper tray, the paper tray includes a casing, a feed roller, a ribbon supplying shaft, and a ribbon collecting shaft; the ribbon supplying shaft and the ribbon collecting shaft are rotatably and pivotally disposed in the casing, and the feed roller and the ribbon collecting shaft are connected with a driving mechanism.

3. The digital photo album with a photo printer as claimed in claim 2, wherein the printer housing has a picking-placing opening corresponding to the paper tray on one side thereof.

4. The digital photo album with a photo printer as claimed in claim 2, wherein the driving mechanism includes a motor, a gear set, a photographic paper driving shaft, and a ribbon driving shaft; the gear set is installed between the motor, the photographic paper driving shaft and the ribbon driving shaft, and the feed roller and the ribbon collecting shaft are connected separately with the photographic paper driving shaft and the ribbon driving shaft of the driving mechanism.

5. The digital photo album with a photo printer as claimed in claim 1, wherein the printer housing has a paper cutter therein.

6. The digital photo album with a photo printer as claimed in claim 1, wherein the printer housing has a conveyer mechanism, the conveyer mechanism has a plurality of pick up wheels, and the printer housing has a paper exit corresponding to the conveyer mechanism.

7. The digital photo album with a photo printer as claimed in claim 1, wherein the printer housing has a circuit unit therein, and the printing unit and the display are electrically connected with the circuit unit.

8. The digital photo album with a photo printer as claimed in claim 7, wherein the circuit unit further has a circuit board and at least one connection port electrically connected with the circuit board.

9. The digital photo album with a photo printer as claimed in claim 8, wherein the circuit unit further has at least one connector electrically connected with the circuit board.

10. The digital photo album with a photo printer as claimed in claim 9, wherein the connector is a memory card connector or a USB connector.
